# EUROPÄISCHE PATENTANMELDUNG

(11) **EP 0 743 168 A2**
(43) Veröffentlichungstag der Anmeldung: **20.11.1996**
(21) Anmeldenummer: 95118669.1
(22) Anmeldetag: 28.11.1995
(51) Int. Cl.: B30B 9/20, B30B 9/24, B01D 33/04

(54) **Pressvorrichtung zum Flüssigkeitsentzug aus einem Gut**

(30) Priorität: 16.05.1995 DE 19517869
(71) Anmelder: AMOS GmbH Anlagentechnik, D-74081 Heilbronn (DE)
(72) Erfinder: Dimitriou, Michael Dipl.-Ing.,, D-75015 Bretten (DE)
(74) Vertreter: Lemcke, Rupert, Dipl.-Ing.

(57) **Zusammenfassung**

Es wird eine Preßvorrichtung zum Flüssigkeitsentzug aus einem Gut mit an einem Gestell zueinander parallel drehbar gelagerten, einen gegenseitigen Abstand aufweisenden Preßwalzen, einer jedem Preßwalzenabstand zugeordneten Umlenkwalze und einem über die Preß- und Umlenkwalzen mäanderförmig umlaufenden Siebbandes angegeben, das die Preßwalzen im wesentlichen unter- und die Umlenkwalzen überläuft. Dabei ist vorgesehen, daß im Bereich der in Durchlaufrichtung des Gutes hinten liegenden Preßwalzen ein weiteres, umlaufendes Band um wenigstens eine Preßwalze zwischen dieser und dem Gut mitgeführt ist.

## Beschreibung

Die Erfindung betrifft eine Preßvorrichtung zum Flüssigkeitsentzug aus einem Gut mit an einem Gestell zueinander parallel drehbar gelagerten, quer zu ihren Drehachsen zumindest im wesentlichen miteinander fluchtenden, einen gegenseitigen Abstand aufweisenden Preßwalzen, einer jedem Preßwalzenabstand zugeordneten, zu den Preßwalzen achsparallelen, drehbar am Gestell gelagerten Umlenkwalze und einem über die Preß- und Umlenkwalzen vermittels eines Antriebes in Durchlaufrichtung des Gutes mäanderförmig umlaufenden Siebband, das die Preßwalzen im wesentlichen unter- und die Umlenkwalzen überläuft, wobei der ersten Preßwalze eine Aufgabe für das Gut in den Spalt zwischen Preßwalze und Siebband vorgeschaltet und der in Durchlaufrichtung des Gutes letzten Preßwalze eine Einrichtung zur Entnahme des abgepreßten Gutes und gegebenenfalls zur Reinigung des Siebbandes nachgeordnet ist.

Für derartige Preßvorrichtungen gibt es vielfache Anwendungsmöglichkeiten, auf die sich der Gegenstand der Erfindung erstecken soll. So kommen die Preßvorrichtungen als Entsaftungsvorrichtungen für Früchte in Form von Obst, Beeren, Trauben und Gemüse in Frage. Ebenso eignen sie sich zur Entsaftung von Pflanzen in Form von Gras, Brennesseln oder dergleichen. Auch eignen sie sich zum Abpressen beispielsweise einer Biomasse, zur Schlammentwässerung oder dergleichen. Nachfolgend wird allgemein nur von einer Preßvorrichtung zum Flüssigkeitsentzug aus einem Gut, insbesondere Obst gesprochen, womit die vorstehend beispielhalber aufgezählten und weitere ähnliche Anwendungsfälle eingeschlossen sein sollen.

Bei bekannten Fressen der eingangs genannten Art, sogenannten Einbandpressen, kann jedem Wechsel des Siebbandes von einer Preßwalze zu einer Umlenkwalze eine auf den Preßwalzenmantel gehende, vom Siebband beabstandete, zur Walzenachse parallele Leiste oder Bürstenwalze zum Abtragen des Gutes von der Preßwalze auf das Siebband zugeordnet sein, woran sich Mittel zur Weiterführung des Gutes mit dem Siebband zum Zusammenlauf des Siebbandes mit der nächsten Preßwalze anschließen können. Diese Mittel können sich an die jeweiligen Leisten bzw. Bürstenwalzen in Durchlaufrichtung des Gutes anschließende Umlenkbleche sein, die den zwischen benachbarten Preßwalzen freien, vom Siebband überdeckten Mantelbogen der zugeordneten Umlenkwalzen teilweise und im wesentlichen äquidistant und unter Freilassung eines wenigstens der Dicke des Siebbandes und der durch das Gut gebildeten Schicht entsprechenden Abstandes überdecken.

Außerdem sind unterhalb der Preßwalzen Mittel zum Auffangen und Abführen der Flüssigkeit angeordnet. Auch sind am Gestell Rückführwalzen zur Überleitung des Siebbandes von der letzten Preßwalze zur ersten Preßwalze drehbar gelagert, welche Rückführwalzen parallel zu den Preßwalzen und mit diesen quer zu ihren Drehachsen zumindest im wesentlichen fluchtend angeordnet sind.

Die so insgesamt mit gegebenenfalls alternativen Gestaltungsmöglichkeiten beschriebenen Preßvorrichtungen stellen eine einfache und preisgünstige Maschine dar, die für einen bestimmten Mengendurchsatz zufriedenstellend arbeitet und bei der Verarbeitung von Obst einen schönen und klaren Saft liefert. Andererseits kann jedoch ein befriedigender Abpreßgrad nur bei verhältnismäßig geringen Durchsatzmengen oder für größere Durchsatzmengen nur mit unverhältnismäßig schweren und langen Maschinen erreicht werden.

Aufgabe der Erfindung ist es, die Wirkungsweise einer Preßvorrichtung der eingangs genannten Art in ihrer Wirkungsweise mit einfachen Mitteln zu verbessern, so daß sich für eine bestimmte Maschinengröße für das Gut ein höherer Abpreßgrad und/oder die Möglichkeit der Verarbeitung größerer Durchsatzmengen ergeben.

Diese Aufgabe ist erfindungsgemäß dadurch gelöst, daß im Bereich der in Durchlaufrichtung des Gutes hinten liegenden Preßwalzen ein weiteres, umlaufendes Band um wenigstens eine Preßwalze zwischen dieser und dem Gut mitgeführt ist.

Diese Maßnahme hat die Wirkung, daß sich eine Druckerhöhung innerhalb des Gutes bei Erhalt einer gleichbleibend dünnen Schicht des Gutes ergibt, woraus ein stärkerer Abpreßgrad für das Gut resultiert. Während bei den bekannten Preßvorrichtungen die Schicht des Gutes für den Durchlauf an jeder Preßwalze immer wieder in Längs- und Querrichtung neu aufgebaut werden muß, bleibt nach der Erfindung im Bereich des weiteren Bandes die Gutschicht auf eine dünnen Stärke so, wie sie durch das Abpressen an der vorhergehenden Preßwalze bereits entstanden ist.

Auf diese Weise laßt sich bei gleichen Proportionen einer Preßvorrichtung bzw. einer Einbandpresse wirtschaftlicher Arbeiten, indem die Durchsatzmenge des Gutes erhöht und/oder der Abpreßgrad des Gutes vergrößert werden kann. In einem praktischen Falle konnte festgestellt werden, daß sich die Durchsatzmenge für das Gut bei Anwendung des Erfindungsgegenstandes um 50 % vergrößern ließ.

Eine weitere Wirkung des Erfindungsgegenstandes liegt darin, daß zwischen den an wenigstens einer Preßwalze vorbeilaufenden Bändern durch deren gegenüber der Preßwalze unterschiedliche Laufradien ein Schereffekt auftritt, der entsprechend einem Reibeffekt auf das Gut ausübt, dieses damit stärker verdichtet und folglich einen höheren Grad des Flüssigkeitsentzuges bewirkt.

Werden mehrere hintereinander liegende Preßwalzen und auch die dazwischen liegenden Umlenkwalzen von dem weiteren Band umlaufen, so kommt noch ein weiterer Reibeffekt der genannten Art hinzu, der sich daraus ergibt, daß die unterschiedlichen Laufradien von Siebband und weiterem Band zwischen Preßwalzen und Umlenkwalzen wechseln, indem das weitere Band an den Preßwalzen einen kleineren und an den Umlenkwalzen einen größeren Laufradius hat als das Siebband.

Schließlich kommt noch hinzu, daß bei Anwendung des Erfindungsgegenstandes auf mehrere hintereinander liegende Preßwalzen auch noch die Umlenkwalzen in die Funktion einer Preßwalze versetzt werden, wodurch sich bei unveränderter Länge der Preßvorrichtung die effektiv an Walzen vorhandene Preßstrecke erheblich vergrößert.

Vorteilhaft ist es, wenn das weitere Band um wenigstens die hinterste Preßwalze mitgeführt ist, der Einsatz des weiteren Bandes also generell ganz am Schluß der Durchlaufstrecke des Gutes durch die Preßvorrichtung geschieht.

Was die Gestaltung des weiteren Bandes betrifft, so kann dieses aus Vollmaterial bestehen, was den Vorteil mit sich bringt, daß am Schluß der Durchlaufstrecke des Gutes für das weitere Band eine Reinigungsvorrichtung entfallen kann.

Grundsätzlich kann vorgesehen sein, daß das weitere Band ein Gewebeband aus Kunststoff-, Textil- oder Metallfäden ist, wobei das weitere Band bzw. dessen Fäden eine Beschichtung aus Gummi oder Kunststoff aufweisen kann. Auf diese Weise ergibt sich die Möglichkeit, das weitere Band gleichermaßen auch als Siebband zu gestalten bzw. zu verwenden, also als ein solches Band, durch das die abgepreßte Flüssigkeit hindurchtreten kann.

Als besonders vorteilhaft erscheint es, wenn vorgesehen wird, daß das weitere Band in Preßrichtung elastisch ausgebildet ist, was sich durch eine entsprechende Gummi- oder Kunststoffbeschichtung erreichen läßt. Hierdurch ergibt sich zu allen bereits vorstehend beschriebenen Wirkungen noch eine besondere zusätzliche Walkwirkung gegenüber dem Gut, durch die die auf das Gut ausgeübte Quetschwirkung noch in Richtung auf eine Steigerung des Flüssigkeitsentzuges vergrößert wird.

Die Preßwalzen können geschlossen glatte Walzenmäntel aufweisen, da die ausgetriebene Flüssigkeit ja über das Siebband abfließen kann. Es kann jedoch auch vorgesehen werden, daß die Mäntel zumindest eines Teiles der Preßwalzen als Siebmäntel ausgebildet sind, um auch auf diesem Weg der Flüssigkeit ein Abfließen zu ermöglichen. Diese Gestaltung kann grundsätzlich für die Preßwalzen in Frage kommen, die nur vom Siebband umlaufen sind. Sie kann jedoch auch dann sinnvoll sein, wenn gleichermaßen das weitere Band nach Art eines Siebbandes ausgebildet ist.

In entsprechender Weise kann auch in dem Bereich, in welchem das weitere Band zur Anwendung kommt, vorgesehen sein, daß die Mäntel der vom weiteren Band überlaufenen Umlenkwalzen als Siebmäntel ausgebildet sind, wodurch die Flüssigkeit auch bei Gestaltung des weiteren Bandes aus Vollmaterial ungehindert abfließen kann.

Die Preßwalzen können im wesentlichen in geradliniger Reihe in Durchlaufrichtung des Gutes hintereinander angeordnet sein, wobei die Durchmesser nacheinander folgender Preßwalzen in Durchlaufrichtung des Gutes stufenweise geringer ausgelegt sein können.

Außerdem kann vorgesehen sein, daß die Preß- und Umlenkwalzen im wesentlichen horizontal hintereinander angeordnet sind, wovon man im Normalfall Gebrauch machen wird. Aus Platzgründen kann es jedoch auch zweckmäßig sein, daß die Preß- und Umlenkwalzen im wesentlichen in Vertikalrichtung hintereinander angeordnet sind bei Aufgabe des Gutes in den Spalt zwischen oberster Preßwalze und Siebband, wobei die Mittel zum Auffangen der Flüssigkeit entsprechend unter den Walzen anzuordnen und dafür Sorge zu tragen ist, daß die von einer Walze fortgehende Flüssigkeit nicht auf die nächstfolgenden Walzen gelangen kann.

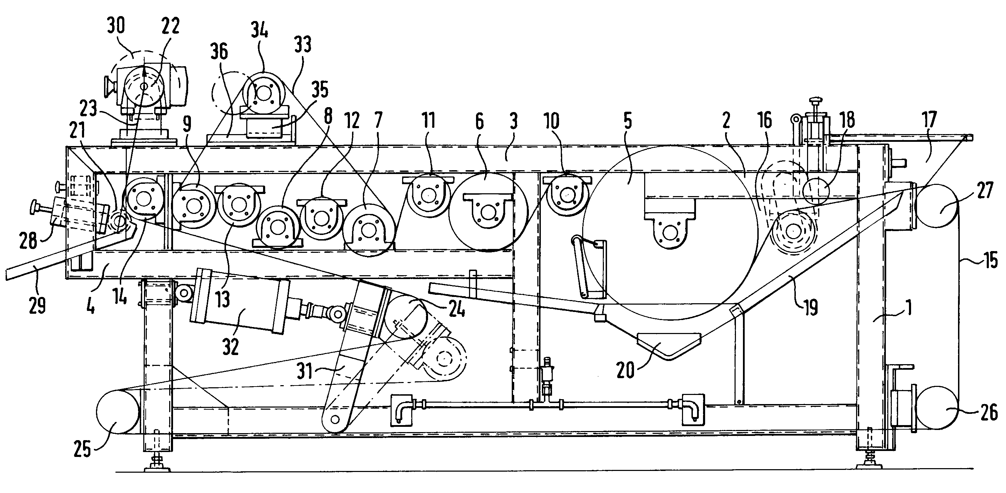

Weitere Merkmale und Einzelheiten der Erfindung ergeben sich aus der nachfolgenden Beschreibung einer Ausführungsform anhand einer als Entsaftungsvorrichtung für Früchte bzw. Obst gedachten Preßvorrichtung, die auf der Zeichnung dargestellt ist.

Die Zeichnung zeigt ein Maschinengestell 1 und an dessen horizontalen Holmen 2, 3, 4 über nicht im einzelnen mit Bezugszeichen versehene Lagerböcke drehbar gelagerte Preßwalzen 5 bis 9, die horizontal fluchtend hintereinander angeordnet sind und gegenseitig einen Abstand bilden, der im wesentlichen durch Umlenkwalzen 10 bis 13 ausgefüllt ist, wobei auch die Umlenkwalzen in nicht näher mit Bezugszeichen versehenen Lagerböcken drehbar gelagert sind, die am Maschinengestell in geeigneter Weise befestigt sind. An die letzte Preßwalze 9 schließt sich eine noch näher zu erläuternde Umlenkwalze 14 an.

Zwischen den genannten Walzen ist ein Siebband 15 mäanderförmig durchgeführt, das jeweils die Preßwalzen 5 bis 9 unterquert, während es über die Umlenkwalzen 10 bis 13 und 14 auf deren oberen Bereich verläuft.

Wie ersichtlich, hat die erste Preßwalze 5 einen wesentlich größeren Durchmesser als die nachfolgenden Preßwalzen, wobei der Durchmesser in Durchlaufrichtung des Gutes, dessen Saft abgepreßt werden soll, stets abnimmt, so daß die letzte Preßwalze 9 vergleichsweise den kleinsten Durchmesser aufweist. Diese Gestaltung hat den Sinn, daß das Obst zu Beginn des Arbeitsganges schonender und gegen Ende des Arbeitsganges schärfer abgepreßt wird.

Dem durch das Siebband 15 und der ersten Preßwalze 5 gebildeten Einlaufspalt 16 wird das abzupressende Gut über eine Aufgabe 17 in Form eines Trichters oder dergleichen zugeführt, der das Gut über einen Austrittsquerschnitt zwischen Siebband 15 und Preßwalze 5 entläßt. Am Austritt der Aufgabe 17 ist noch eine angetriebene Glättwalze 18 zugeordnet, die dafür sorgt, daß das Gut in einigermaßen gleichmäßig geordneter Schicht in den Einlaufspalt 16 gelangt.

Nachdem das Gut so entlang des Umlaufbogens zwischen Siebband 15 und Preßwalze in einer ersten Stufe entsaftet worden ist, wird es von der Preßwalze 5 durch eine nicht dargestellte Leiste abgeschabt und mit dem Siebband 15 über die Umlenkwalze 10 weitergeführt so, daß es zusammen mit dem Siebband 15 an die nächstfolgende Preßwalze 6 gerät und entlang dem dortigen Umschlingungsbogen zwischen Preßwalze und Siebband 15 weiter entsaftet werden kann.

Damit das Gut nach dem Verlassen der Preßwalze 5 sich nicht vom Siebband 15 lösen und in ungeordneter Form weitergeführt werden kann, kann ein ebenfalls nicht dargestelltes Umlenkblech im Anschluß an die erwähnte Leiste vorgesehen sein, das sich im wesentlichen äquidistant über einen Teil des Umfanges der Umlenkwalze 10 erstreckt soweit, bis das Gut im wesentlichen durch Schwerkrafteinfluß wieder in die Paarung zwischen Siebband 15 und nächstfolgender Preßwalze 6 weitergeführt wird.

Der so geschilderte Preßvorgang für das Gut setzt sich gleichermaßen bis zum Ende der Durchlaufstrecke des Siebbandes 15 über Preßwalzen und Umlenkwalzen fort. Der dabei austretende Fruchtsaft wird in einer Auffangwanne 19 gesammelt, in die auch eine im hinteren Bereich der Preßvorrichtung zwischen den Holmen 4 befindliche und dadurch nicht sichtbare Auffangwanne mündet. Dadurch erstreckt sich die Auffangwanne unterhalb sämtlicher Preßwalzen 5 bis 9. Sie hat einen Ablauf 20 zur Entnahme des abgepreßten Saftes.

Wie bereits erwähnt, schließt sich am Schluß der Bearbeitungsstrecke an die letzte Preßwalze 9 eine Umlenkwalze 14 an, an der auf dem Siebband eine nicht dargestellte Abstreifleiste aufsitzt, hinter die eine Bürstenwalze 21 geschaltet ist, die angetrieben durch einen Motor 22 über beispielsweise einen symbolisch dargestellten Riemen 23 das Siebband 15 endgültig reinigt, bevor dieses über Rückführwalzen 24 bis 27 wieder zum Maschineneinlauf, das heißt zur ersten Preßwalze 5 rückgeleitet wird. Unterhalb der durch eine Vorrichtung 28 einstellbaren Bürstenwalze 21 ist ein Führungsblech 29 zum Ableiten des entsafteten Gutes angeordnet.

Mit Hilfe eines weiteren Motors 30 findet im übrigen mittels eines nicht näher dargestellten Treibmittels der Antrieb der Entsaftungsvorrichtung über die letzte Umlenkwalze 14 statt, das Siebband wird also bezüglich der entsaftenden Arbeitsstrecke durch die Vorrichtung gezogen, woraus sich entlang der Preßwalzen 5 bis 9 ein zunehmender Druck im Umschlingungsbogen zwischen jeweiliger Preßwalze und dem Siebband 15 ergibt.

Um die Grundspannung des Siebbandes 15 herzustellen bzw. aufrechtzuerhalten, ist die Rückführwalze 24 beidseits über am Maschinengestell 1 schwenkbar angelenkte Arme 31 gelagert, wobei die Schwenkstellung dieser Arme durch eine Vorrichtung 32 beispielsweise in Form eines Zylinder-Kolben-Aggregates bestimmbar und einstellbar ist, die am Maschinengestell 1 schwenkbar angelenkt ist.

Damit das abzupressende Gut sich während des Durchlaufes durch die Vorrichtung innerhalb der Breite des Siebbandes 15 hält, können die erwähnten, Umlenkwalzen zugeordneten Umlenkbleche seitlich mit Leitblechen versehen sein, die auf die Breite des Siebbandes 15 in entsprechender Weise eingestellt sind.

Wie nun weiterhin aus der Zeichnung ersichtlich, ist bei der insoweit bekannten Preßvorrichtung für den von den Preßwalzen 7 bis 9 erfaßten Bereich der Mitlauf eines weiteren Bandes 33 vorgesehen, das bezüglich der Preßwalzen 7 bis 9 direkt an den Preßwalzen und bezüglich der Umlenkwalzen 12 und 13 außerhalb des Siebbandes 15 und des Gutes mitläuft. Sein Rücklauf erfolgt über eine Rückführwalze 34, die parallel zu den übrigen Walzen auf einem Bock 35 drehbar gelagert ist, der zur Spannung des weiteren Bandes 33 auf einem Schlitten 36 verstellbar und feststellbar ist, der auf den Holmen 3 des Maschinengestells 1 sitzt.

Dieses weitere Band 33 führt nun dazu, daß das Gut beginnend mit der Schichtstärke, mit der es von der Preßwalze 6 kommt, gleichmäßig zusammengehalten über die Preßwalzen 7 bis 9 sowie die Umlenkwalzen 12 und 13 geführt und dabei einem erhöhten Preßdruck unterzogen wird, wodurch sich eine erhebliche Steigerung des Abpreßgrades für das Gut ergibt. Außerdem wird das Gut zusätzlich einer Scherwirkung zwischen Siebband 15 und weiterem Band 33 dadurch unterworfen, daß beide Bänder an den Preßwalzen 7 bis 9 einerseits und den Umlenkwalzen 12, 13 andererseits unterschiedliche Laufradien haben, sich folglich auch an der jeweiligen Walze mit unterschiedlicher Geschwindigkeit bewegen. Auch ist auf diese Weise erreicht, daß im Gegensatz zu den Umlenkwalzen 10 und 11 jetzt auch die Umlenkwalzen 12 und 13 die Funktion einer Preßwalze einnehmen. Insgesamt läßt sich dadurch nicht nur der bezogen auf die dargestellte Maschine erreichbare Abpreßgrad für das Gut erhöhen sondern es läßt sich gleichermaßen auch die Durchsatzmenge steigern, also insgesamt die Maschine der dargestellten Größe für eine höhere Arbeitsleistung einsetzen.

Das weitere Band 33 kann aus Vollmaterial bestehen, also geschlossen glattflächig sein, was den Vorteil mit sich bringen würde, daß hinter der Preßwalze 9 eine Reinigung des weiteren Bandes 33 nicht erforderlich ist.

Es besteht jedoch auch die Möglichkeit, das weitere Band 33 ebenso wie das Band 15 als Siebband auszubilden, um auf diese Weise den Austritt der abgepreßten Flüssigkeit zu erleichtern. Schließlich kann auch vorgesehen werden, das weitere Band 33 in Preßrichtung, also radial zu den Walzen elastisch auszubilden bzw. mit einer elastischen Beschichtung zu versehen, womit sich ein Walkeffekt ergibt, der eine weitere Steigerung des Abpreßgrades erlaubt.

Was die Mäntel der Preßwalzen 5 bis 9 einerseits sowie der Umlenkwalzen 12 und 13 andererseits betrifft, so können diese geschlossen glattwandig sein, es besteht jedoch auch die Möglichkeit, diese Mäntel als Siebmäntel auszubilden, um den Flüssigkeitsabfluß zu erleichtern, was sich für die Umlenkwalzen 12 und 13 insbesondere dann empfiehlt, wenn das weitere Band 33 aus Vollmaterial besteht.

## Patentansprüche

1. Preßvorrichtung zum Flüssigkeitsentzug aus einem Gut mit an einem Gestell (1) zueinander Parallel drehbar gelagerten, quer zu ihren Drehachsen zumindest im wesentlichen miteinander fluchtenden, einen gegenseitigen Abstand aufweisenden Preßwalzen (5 bis 9), einer jedem Preßwalzenabstand zugeordneten, zu den Preßwalzen (5 bis 9) achsparallelen, drehbar am Gestell (1) gelagerten Umlenkwalze (10 bis 13) und einem über die Preß- (5 bis 9) und Umlenkwalzen (10 bis 13) vermittels eines Antriebes (30) in Durchlaufrichtung des Gutes mäanderförmig umlaufenden Siebband (15), das die Preßwalzen (5 bis 9) im wesentlichen unter- und die Umlenkwalzen (10 bis 13) überläuft, wobei der ersten Preßwalze (5) eine Aufgabe (17) für das Gut in den Spalt (16) zwischen Preßwalze (5) und Siebband (15) vorgeschaltet und der in Durchlaufrichtung des Gutes letzten Preßwalze (9) eine Einrichtung (21) zur Entnahme des abgepreßten Gutes und gegebenenfalls zur Reinigung des Siebbandes (15) nachgeordnet ist,
dadurch gekennzeichnet,
daß im Bereich der in Durchlaufrichtung des Gutes hinten liegenden Preßwalzen (7 bis 9) ein weiteres, umlaufendes Band (33) um wenigstens eine Preßwalze (7, 8, 9) zwischen dieser und dem Gut mitgeführt ist.

2. Preßvorrichtung nach Anspruch 1,
dadurch gekennzeichnet,
daß das weitere Band (33) um wenigstens die hinterste Preßwalze (9) mitgeführt ist.

3. Preßvorrichtung nach Anspruch 1 oder 2,
dadurch gekennzeichnet,
daß das weitere Band (33) um mehrere benachbarte Preßwalzen (7 bis 9) und die zwischen diesen angeordneten Umlenkwalzen (12, 13) mitgeführt ist.

4. Preßvorrichtung nach einem oder mehreren der Ansprüche 1 bis 3,
dadurch gekennzeichnet,
daß das weitere Band (33) aus Vollmaterial besteht.

5. Preßvorrichtung nach einem oder mehreren der Ansprüche 1 bis 4,
dadurch gekennzeichnet,
daß das weitere Band (33) ein Gewebeband aus Kunststoff-, Textil- oder Metallfäden ist.

6. Preßvorrichtung nach einem oder mehreren der Ansprüche 1 bis 5,
dadurch gekennzeichnet,
daß das weitere Band (33) bzw. dessen Fäden eine Beschichtung aus Gummi oder Kunststoff aufweist.

7. Preßvorrichtung nach einem oder mehreren der Ansprüche 1 bis 6,
dadurch gekennzeichnet,
daß das weitere Band (33) in Preßrichtung elastisch ausgebildet ist.

8. Preßvorrichtung nach einem oder mehreren der Ansprüche 1 bis 7,
dadurch gekennzeichnet,
daß die Preßwalzen (5 bis 9) geschlossen glatte Walzenmäntel aufweisen.

9. Preßvorrichtung nach einem oder mehreren der Ansprüche 1 bis 7,
dadurch gekennzeichnet,
daß die Mäntel zumindest eines Teils der Preßwalzen (5 bis 9) als Siebmäntel ausgebildet sind.

10. Preßvorrichtung nach einem oder mehreren der Ansprüche 1 bis 9,
dadurch gekennzeichnet,
daß die Mäntel der vom weiteren Band (33) überlaufenen Umlenkwalzen (12, 13) als Siebmäntel ausgebildet sind.

11. Preßvorrichtung nach einem oder mehreren der Ansprüche 1 bis 10,
dadurch gekennzeichnet,
daß die Preßwalzen (5 bis 9) im wesentlichen in geradliniger Reihe in Durchlaufrichtung des Gutes hintereinander angeordnet sind.

12. Preßvorrichtung nach einem oder mehreren der Ansprüche 1 bis 11,
dadurchgekennzeichnet,
daß die Durchmesser nacheinander folgender Preßwalzen (5 bis 9) in Durchlaufrichtung des Gutes stufenweise geringer ausgelegt sind.

13. Preßvorrichtung nach einem oder mehreren der Ansprüche 1 bis 12,
dadurch gekennzeichnet,
daß die Preß- (5 bis 9) und Umlenkwalzen (10 bis 13) im wesentlichen horizontal hintereinander angeordnet sind.

14. Preßvorrichtung nach einem oder mehreren der Ansprüche 1 bis 12,
dadurch gekennzeichnet,
daß die Preß- und Umlenkwalzen im wesentlichen in Vertikalrichtung hintereinander angeordnet sind bei Aufgabe des Gutes in den Spalt zwischen oberster Preßwalze und Siebband.
